(19) Europäisches Patentamt

European Patent Office

Office européen des brevets

(11) Publication number: **0 104 261**
**B1**

(12) **EUROPEAN PATENT SPECIFICATION**

(45) Date of publication of patent specification: **12.10.88**

(51) Int. Cl.⁴: **B 23 H 1/08**

(21) Application number: **83901102.0**

(22) Date of filing: **02.04.83**

(86) International application number:
**PCT/JP83/00105**

(87) International publication number:
**WO 83/03377 13.10.83 Gazette 83/24**

(54) **MACHINING SOLUTION FOR ELECTRIC DISCHARGE MACHINING.**

(30) Priority: **03.04.82 JP 54809/82**

(43) Date of publication of application:
**04.04.84 Bulletin 84/14**

(45) Publication of the grant of the patent:
**12.10.88 Bulletin 88/41**

(84) Designated Contracting States:
**CH DE FR LI**

(56) References cited:
**JP-A-50 146 998**
**JP-A-56 045 331**

(73) Proprietor: **Furukawa, Toshihiko**
**10-15, Tsukimino 1-chome Yamato-shi**
**JP-Kanagawa 242 (JP)**

(72) Inventor: **Furukawa, Toshihiko**
**10-15, Tsukimino 1-chome Yamato-shi**
**JP-Kanagawa 242 (JP)**

(74) Representative: **Bond, Bentley George et al**
**Haseltine Lake & Co. 28 Southampton Buildings**
**Chancery Lane**
**London WC2A 1AT (GB)**

Courier Press, Leamington Spa, England.

## Description

### Technical field

The present invention relates to a working liquid for electric discharge machining.

### Background art

In general, when electric energy is supplied to a machining gap formed between a working electrode and a workpiece and electric discharge machining is carried out by an electric discharge spark produced across the machining gap, a working liquid which is mainly composed of an insulation oil or water is usually supplied to the machining gap and the electric discharge machining is carried out in the presence of the working liquid. Thus, the efficiency and the accuracy in electric discharge machining depends greatly upon the kind of working liquid used. Therefore, in the prior art, many kinds of improved working liquids, such as an emulsion formed by adding water to insulation oil, or an emulsion which is a mixture formed by adding electrolyte to insulation oil, have been proposed (as, for example, in Japanese Laid-Open Publication No. 6416/80). However, the resulting improvements in the performance of electric discharge machining have been less than desired.

### Disclosure of invention

It is an object of the present invention to provide an improved working liquid for electric discharge machining by which the electric discharge machining of a workpiece can be carried out with high accuracy and at high speed with little wear of the working electrode.

To achieve the above mentioned object, the inventor examined the various mixing conditions of the working oil for electric discharge machining and water in order to find those conditions suitable for electric discharge machining. As a result, he confirmed that machining is smoothly carried out when the overcut size is not less than 0.1 mm for each side in the case where when the diameter of the emulsified particles is between approximately 0.2 and 50 [μ] after two liters of pure water and a liter of water-in-oil non-ionic surface active agent are added to one hundred liters of kerosene and the resulting material is stirred. However, he further confirmed that since the degree of the insulation of the working liquid is substantially lowered for an overcut condition of less than 0.1 mm, recovery of the insulation is difficult in an actual machining operation, so that the non-insulated condition arises and progress of the electric discharge machining stops.

Then, the inventor performed various experiments with smaller diameters of the emusified particles. As a result, he found that when the amount of water is selected to be within the range of 0.5 to 5 [volume %] and the diameter of the water particles is made to be less than 0.15 [μ], the milky working liquid becomes transparent, and this transparent working liquid has the same insulation characteristics and insulation recovery characteristics as conventional working oil. Furthermore, he confirmed that when such a working liquid is used, electric discharge machining can be carried out more smoothly and at a higher machining speed than in the case where only an insulation oil is used as the working liquid. In order to obtain the good recovery from dielectric breakdown necessary for smooth progress of electric discharge machining, it is necessary that the dielectric breakdown voltage be selected within a range of about 25,000 to 45,000 [v/2.5 mm] (that is, 10,000 to 18,000 [v/ mm]). In addition, the dielectric breakdown voltage for the kerosene must be approximately 60,000 [v/2.5 mm]. These values for the dielectric breakdown voltage are obtained in accordance with the method prescribed by Japanese Industrial Standard C 2101.

It was confirmed that use of the above described transparent working liquid for electric discharge machining of the present invention made it possible to machine a workpiece at the same speed as in the case of using a conventional emulsified working liquid composed of the same components as that of the working liquid of the present invention. Furthermore, it was confirmed that the degree of electrode wear is approximately equal to that when kerosene is used as the working liquid. It was experimentally confirmed that under condition of no-wear or less than 15 [μR$_{max}$] of roughness, when the diameter of the emulsified particles is within the range from 0.2 [μ] to 50 [μ], the rate of the wear of the electrode is 2 [%] or more, as against 1 [%] or less when kerosene is used as the working liquid. Therefore, a working liquid of such type is not satisfactory because of the strong effect of the water thereon. However, when the emulsified particles are reduced to less than 0.15 [μ] in diameter, the rate of electrode wear when the transparent working liquid is used is the same as that of a working liquid composed of only kerosene.

As described above, the insulation characteristics of the working liquid can be improved by reducing the diameter of the particles and the working speed can be increased without any effect on the wear of the electrode. By sufficiently stirring the working liquid composed of kerosene, water and water-in-oil non-ionic surface active agent by means of a proper stirring device, it is possible to make the diameter of the particles of water less than 0.15 [μ] and to make the working liquid transparent. By adding 2 liters of pure water and one liter of the water-in-oil non-ionic surface active agent (for example, Span-20, Atlas Powder Co.) to one hundred liters of kerosene and stirring it sufficiently, the water is dispersed in the kerosene in particles having diameters of less than 0.15 [μ], and a transparent working liquid having a dielectric breakdown voltage of 39,000 [v/2.5 mm] is obtained.

A transparent working liquid is convenient since it allows the operator to monitor the gap between the workpiece and the working electrode.

Monoglycerine fatty acid esters, polyglycol fatty acid esters, sorbitan fatty acid esters, sucrose fatty acid esters, alkanol fatty acid amides, polyethylene glycol condensation type non-ionic surface active agent or the like are usable as the water-in-oil non-ionic surface active agent. It was found by experiment that, especially, good results are obtained when a polyalcohol fatty acid ester type non-ionic surface active agent (e.g. Span-20, Atlas Powder Co.) is used.

Furthermore, the various prior art working liquids, such as a mineral oil (e.g. kerosene produced by Nisseki metal Works, Nippon Sekiyu Co., Ltd.) or vegetable oil are usable as the working liquid in this invention. The surface active agent serves to disperse the water in the oil in the condition of fine particles, and furthermore, to eject the chips produced in the working gap from the working gap. Since the surface active agent is electrically neutral, it does not directly affect the discharge operation per se in the working gap.

The manufacturer's recommendations can be followed regarding the amount of surface active agent to be added. However, this amount is not critical, and it is preferable to use the agent within the range of approximately 10 to 50 [volume %] to the water.

Further objects and advantages of the present invention will be apparent from the following detailed description to be read in conjunction with the accompanying drawings.

Brief description of drawings

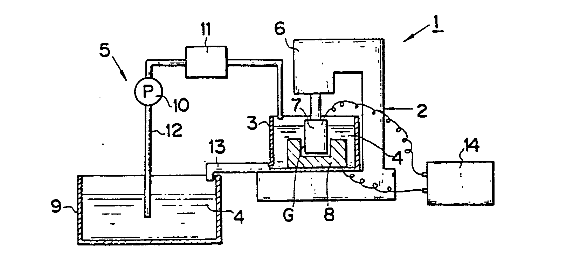

Fig. 1 is a view illustrating an electric discharge machining apparatus in which an electric discharge machining is carried out by the use of a working liquid of the present invention.

Best mode for carrying out the invention

Referring to Fig. 1, an electric discharge machining apparatus 1 has an electric discharge machine 2, a supplying device 5 for supplying working liquid 4 into a working tank 3 of the electric discharge machine 2. The electric discharge machine 2 feeds a working electrode 7 mounted on a head 6 to a workpiece 8 set in the working tank 3 and machines the workpiece 8 into a configuration corresponding to that of the working electrode 7. Working pulses produced by a working pulse generator 14 are applied to a gap G formed between the workpiece 8 and the working electrode 7. The supplying device 5 feeds the working liquid 4 of the present invention from the liquid tank 9 to the working tank 3 and is provided with a feeding pipe 12 having a feeding pump 10 and a filter 11. One end of the feeding pipe 12 is extended into the liquid tank 9 and other end thereof communicates with the working tank 3. Upon operating the feeding pump 10, the working liquid 4 in the liquid tank 9 will be supplied into the working tank 3 after the working liquid 4 is filtered by means of a filter 11. A drain pipe 13 is connected with the lower portion of the working tank 3, and the used working liquid is returned through the drain pipe 13 to the liquid tank 9.

In order to effect electric discharge machining of the workpiece 8 at higher speed and with little wear of the working electrode, the working liquid of the present invention is used as the working liquid 4. In this embodiment, the working liquid 4 is prepared by adding two liters of pure water and one liter of polyalcohol fatty acid esters (Span-20 Atlas Powder Co., a water-in-oil non-ionic surface active agent) to one hundred liters of kerosene (Nisseki Metal Works, Nippon Sekiyu Co., Ltd.) and stirring it. The working liquid 4 is sufficiently stirred so as to make the particle diameter of the water dispersed in the kerosene less than 0.15 [μ] and so as to make the dielectric breakdown voltage 39,00 [v/2.5 mm]. After the particles of water have been disposed in the kerosene, the working liquid 4 will stay transparent even if the stirring is stopped.

By the experiment of the electric discharge machining under the various working conditions, it is confirmed that the removal speed is improved by the use of the working liquid of the present invention as compared with the use of the conventional working liquid composed of kerosene having a flashing point of more than 70 [°C]. That is, when a working electrode of copper and a workpiece of steel is used and the electrode is connected to the positive terminal, the removal speed is increased to 3 times under each of surface roughness conditions of 8, 10 and 15 [$\mu R_{max}$] for no-wear condition, 2 times for 25 and 35 [$\mu R_{max}$], 1.6 times for 45 [$\mu R_{max}$]. Furthermore, it was confirmed for each case that the wear of the electrode was less than 1 [%], which is the same value as that obtained with kerosene having a flashing point of more than 70 [°C]. In contrast, when water is dispersed in the working oil as emulsified particles, the wear of the electrode is approximately 2 [%]. Consequently, it is understood from the experimental result described above that the electric discharge machining characteristics can be remarkably improved by employing the working liquid of the present invention.

Although the amount of the water added to the kerosene is selected at 2 [volume %] in the above embodiment, it was confirmed that for the range from 0.5 [volume %] to 5 [volume %] the removal speed is remarkably increased while the rate of wear of the electrode remains the same as that for a working liquid composed of kerosene.

According to the present invention, as described above, it is possible to increase the removal speed remarkably without lowering the rate of wear of the electrode. Furthermore, since the working liquid is transparent, it is an advantage that the working portion is kept visible condition.

List of all Reference Signs and the Features denoted by them

| Reference Sign | Feature |
| --- | --- |
| 1 | electric discharge machining apparatus |
| 2 | electric discharge machine |
| 3 | working tank |
| 4 | working liquid |
| 5 | supplying device |
| 6 | head |
| 7 | working electrode |
| 8 | workpiece |
| 9 | liquid tank |
| 10 | feeding pump |
| 11 | filter |
| 12 | feeding pipe |
| 13 | drain pipe |
| 14 | working pulse generator |
| G | gap |

## Claims

1. A working liquid for use in electric discharge machining characterized in that 0.5 to 5 [volume %] of water is dispersed in an oil in particles having diameters of less than 0.15 [µ] in the presence of a water-in-oil non-ionic surface active agent, the dielectric breakdown voltage of the working liquid is between 25,000 and 45,000 [v/2.5 mm], and the working liquid is transparent.

2. A working liquid as claimed in Claim 1 wherein 10 to 50 [volume %] of the water-in-oil non-ionic surface active agent to the water is contained therein.

3. A working liquid as claimed in Claim 2 wherein said water-in-oil non-ionic surface active agent is a polyalcohol fatty acid ester type water-in-oil non-ionic surface active agent.

## Patentansprueche

1. Eine Flüssigkeit zur Verwendung in der Elektroerosionsbearbeitung um die Elektroerosionsstelle herum dadurch gekennzeichnet, dass 0,5 bis 5 vol. % aus Wasser besteht, welches in einem Oel unter Partikelform mit einem Durchmesser unter 0,15 µ verteilt ist, wobei ein nicht ionisierter Wasser-in-Oel wirksamer Oberflächenaktivstoff verwendet wird, wobei die elektrische Durchschlagsspannung zwischen 25 und 45 KVolt für 2,5 mm liegt und diese Flüssigkeit durchsichtig ist.

2. Flüssigkeit nach Anspruch 1, dadurch gekennzeichnet, dass sie 10 bis 50 Vol % nicht ionisierten Wasser-in-Oel wirksamer Oberflächenaktivstoff zum Wasser enthält.

3. Flüssigkeit nach Anspruch 2, dadurch gekennzeichnet, dass der nicht ionisierte Wasser-in-Oel wirksamen Oberflächenaktivstoff vom Typus der polyalkalischen Fettsäuren Ester sind.

## Revendications

1. Liquide de travail destiné à être utilisé en usinage par étincelage, caractérisé en ce que de 0,5 à 5 [% volume] d'eau sont dispersés dans une huile sous la forme de particules ayant un diamètre inférieur à 0,15 [µ] en présence d'un agent tensioactif non ionique capable de produire une émulsion d'eau dans l'huile, la tension de rupture diélectrique du liquide de travail étant située entre 25000 et 45000 [v/2,5 mm] et le liquide de travail étant transparent.

2. Liquide de travail selon la revendication 1, où l'agent tensioactif non ionique capable de produire une émulsion d'eau dans l'huile est présent en une proportion représentant de 10 à 50 [% volume] de l'eau.

3. Liquid de travail selon la revendication 2, où ledit agent tensioactif non ionique capable de produire une émulsion d'eau dans l'huile est une agent tensioactif non ionique capable de produire une émulsion d'eau dans l'huile du type ester d'acide gras at de polyalcool.